# EUROPÄISCHE PATENTSCHRIFT

(11) **EP 1 516 011 B1**
(45) Veröffentlichungstag und Bekanntmachung des Hinweises auf die Patenterteilung: **11.11.2009**
(21) Anmeldenummer: 03735503.9
(22) Anmeldetag: 30.05.2003
(51) Int. Cl.: C08G 77/50, C09D 183/14

(54) **MULTIFUNKTIONELLE CARBOSILOXANE MIT LINEAREN UND CYCLISCHEN STRUKTURELEMENTEN**
MULTIFUNCTIONAL CARBOSILOXANES COMPRISING LINEAR AND CYCLIC STRUCTURAL ELEMENTS
CARBOSILOXANES MULTIFONCTIONNELS COMPORTANT DES ELEMENTS STRUCTURAUX LINEAIRES ET CYCLIQUES

(30) Priorität: 11.06.2002 DE 10225825
(43) Veröffentlichungstag der Anmeldung: 23.03.2005
(73) Patentinhaber: Bayer MaterialScience AG, 51368 Leverkusen (DE)
(72) Erfinder: SCHMALSTIEG, Lutz, 50676 Köln (DE); FRANK, Wolfgang, 50939 Köln (DE); MECHTEL, Markus, 51467 Bergisch Gladbach (DE); STEINER, Matthias, 51467 Bergisch Gladbach (DE)
(86) Internationale Anmeldenummer: PCT/EP2003/005696
(87) Internationale Veröffentlichungsnummer: WO 2003/104306

(56) Entgegenhaltungen:
- US-A- 5 880 305
- US-A- 6 136 939
- US-B1- 6 284 834

## Beschreibung

Die Erfindung betrifft lösliche anorganisch-organische Zusammensetzungen enthaltend Strukturelemente linearer und cyclischer Carbosiloxane, ein neues Verfahren zu deren Herstellung sowie deren Verwendung als Beschichtungsmittel.

Multifunktionelle, cyclische Carbosiloxane sind bereits vielfach beschrieben worden. Beispielsweise sind aus der US-A 6,005,131 und WO-A 94/06807 monomere, multifunktionelle, cyclische Carbosiloxane bekannt, aus denen mit Hilfe des Sol-Gel Prozess in Kombination mit Metallalkoxiden anorganisch-organische Hybridmaterialien herstellbar sind. Diese Materialen können z.B. zur Beschichtung von Oberflächen verwendet werden. Die so erhaltenen Beschichtungen zeichnen sich durch eine gute Lösemittel- und Chemikalienbeständigkeit sowie eine hohe mechanische Verschleißfestigkeit aus.

Verschiedene Verfahren zur Herstellung multifunktioneller, cyclischer Carbosiloxane werden in der US-A 4,461,867, US-A 4,525,400 oder US-A 6,136,939 offenbart. Nachteilig an den zitierten Verfahren des Standes der Technik ist, dass zur Herstellung multifunktioneller Carbosiloxane als Edukte reine, cyclische Hydrogen- oder reine cyclische Alkenylsiloxane eingesetzt werden. Die Herstellung cyclischer Hydrogen- und Alkenylsiloxane mit hohem Reinheitsgrad wird z.B. in der EP-A 0 967 236, US-A 5,189,193, DE-A 1195752 und DE-A 4414690 beschrieben. Um jedoch den für die Synthese cyclischer Carbosiloxane nötigen Reinheitsgrad der Edukte zu erzielen, sind aufwendige und damit kostenintensive Aufarbeitungsverfahren erforderlich.

Ein weiterer Nachteil der bisher bekannten Herstellverfahren ist deren aufwendige technische Durchführung, was einer großtechnischen Umsetzung dieser Verfahren bisher entgegen stand.

Aus der WO-A 94/06807 und US-A 4,525,400 sind beispielsweise Herstellverfahren für monomere, multifunktionelle Carbosiloxane bekannt, in denen mittels einer Hydrosilylierungsreaktion Alkenylalkoxysilane mit Organohydrogencyclosiloxan umgesetzt werden. Damit die Reaktion quantitativ verläuft, wird das Alkenylalkoxysilan im Überschuss eingesetzt. Nach beendeter Reaktion wird nicht umgesetztes Edukt destillativ entfernt. In der US-A 4,525,400 erfolgt die Umsetzung in einer 20 gew.-%igen Lösung, was zu einer geringen Raum-Zeit-Ausbeute führt.

Nachteilig ist an den beschriebenen Verfahren des Standes der Technik, dass keine in organischen Lösemitteln lösliche Kondensationsprodukte von multifunktionellen Carbosiloxanen herstellbar sind.

Weitere Verfahren zur Herstellung monomerer, multifunktioneller, cyclischer alkoxy- und hydroxyfunktioneller Carbosiloxane werden in der US-A 6,005,131 und US-A 5,880,305 beschrieben. Im ersten Reaktionsschritt wird ein Hydrogenchlorsilan an ein Alkenylcyclosiloxan addiert. Anschließend erfolgt eine Hydrolyse oder Alkoholyse zu den entsprechenden monomeren, multifunktionellen cyclischen Carbosiloxanen. Da die Hydrosilylierung aufgrund der erforderlichen Aktivierungsenergie vorzugsweise bei erhöhten Temperaturen durchgeführt werden muss, besteht bei diesem Verfahren das Problem, dass aufgrund der niedrigen Siedepunkte der Hydrogenalkylchlorsilanen während der Reaktion Teile des Hydrogenalkylchlorsilans aus dem Reaktionsgefäß entweichen können. Dies hat zur Folge, dass nicht umgesetzte Alkenylgruppen im Endprodukt verbleiben und die Qualität des Produktes nachteilig beeinflussen können. Daher muss bei diesen Verfahren der Umsetzungsgrad nach der Hydrosilylierung analytisch kontrolliert und gegebenenfalls Hydrogenalkylchlorsilan nachdosiert werden. Es besteht auch die Möglichkeit direkt einen Überschuss an Hydrogenalkylchlorsilan einzusetzen, der jedoch nach der Umsetzung wieder destillativ entfernt werden muss.

Ein Verfahren zur Herstellung löslicher oligomerer, cyclischer alkoxy- oder hydroxyfunktioneller Carbosiloxane wird in der US-A 6,136,939 beschrieben. Jedoch kommt es auch bei diesem Verfahren zu den zuvor beschriebenen Nachteilen.

Aufgabe der vorliegenden Erfindung bestand somit in der Bereitstellung in organischen Lösemitteln lösliche Zusammensetzungen multifunktioneller Carbosiloxane sowie ein neues Verfahren zu deren Herstellung und Verwendung.

Es wurde nun gefunden, dass durch Einsatz von Mischungen linearer und cyclischer Hydrogensiloxane, die bei der Herstellung von SiH-funktionellen Silikonölen als Zwangsanfallsprodukt anfallen und ohne weiteren Reinigungsaufwand einsetzbar sind, neue lösliche anorganisch-organische Zusammensetzungen multifunktioneller Carbosiloxane erhältlich sind. Gleichzeitig wurde ein Verfahren zu deren Herstellung gefunden, welches sich durch eine leichte Zugänglichkeit der Edukte, eine einfache Prozessführung und eine hohe Raum-Zeit-Ausbeute auszeichnet.

Gegenstand der vorliegenden Erfindung sind lösliche anorganisch-organische Zusammensetzungen oligomerer, multifunktioneller Carbosiloxane enthaltend
A) mindestens ein cyclisches Strukturelement der allgemeinen Formel (I), 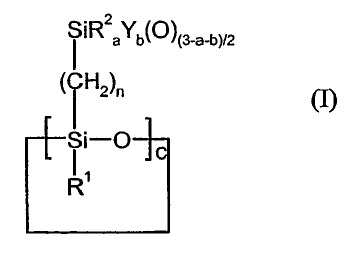 in welcher
   R¹, R² lineare, verzweigte oder cyclische C₁-C₈-Alkyl-Reste und/oder C₆-C₁₄-Aryl-Reste, bevorzugt Methyl, Ethyl, n-Propyl, Isopropyl, Butyl, Isobutyl, ter.-Butyl, n-Pentyl, Neopentyl, Hexyl, Heptyl, Octyl, Cyclopentyl, Cyclohexyl, Cycloheptyl sowie Phenyl oder Naphthyl, besonders bevorzugt Methyl oder Ethyl, ganz besonders bevorzugt Methyl sind, wobei R¹ und R² innerhalb eines Strukturelementes gleich oder ungleich sein können,
   - Y: OH oder C₁-C₄-Alkoxy, bevorzugt OH oder Ethoxy ist,
   - a: 0 ≤ a ≤ 2, bevorzugt 1 oder 2,
   - b: 0,5 ≤ b ≤ 2,8 und a + b ≤ 3 ist,
   - c: eine Zahl ≥ 3, bevorzugt eine Zahl von 3 bis 8,
   - n: eine Zahl von 2 bis 10, bevorzugt 2 ist und
B) mindestens ein lineares Strukturelement der allgemeinen Formel (II), 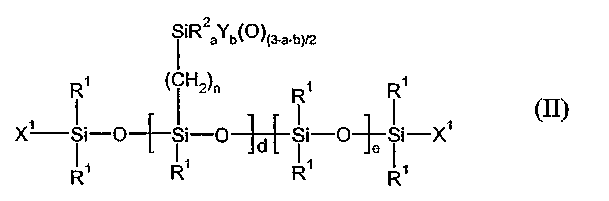
in welcher
R¹, R², a, b, Y die in der allgemeinen Formel (I) angegebene Bedeutung haben,
- X¹: R¹ oder -(CH₂)ₙSiR²ₐY_{b}(O)_{(3-a-b)/2} bevorzugt R¹,
- d: eine Zahl von 1 bis 100, bevorzugt eine Zahl von 1 bis 30,
- e: eine Zahl von 0 bis 50, bevorzugt eine Zahl von 0 bis 20 ist.

Die erfindungsgemäßen oligomeren, multifunktionellen Carbosiloxane enthalten 30-99 Gew.-%, bevorzugt 50-99 Gew.-%, besonders bevorzugt 65-99 Gew.-% cyclische Strukturelemente der allgemeinen Formel (I), mit der Maßgabe, dass die Summe der Gew.-% 100 ergibt.

Bevorzugt sind lösliche anorganisch-organische Zusammensetzungen oligomerer, multifunktioneller Carbosiloxane enthaltend
A) mindestens ein cyclisches Strukturelement der allgemeinen Formel (III) 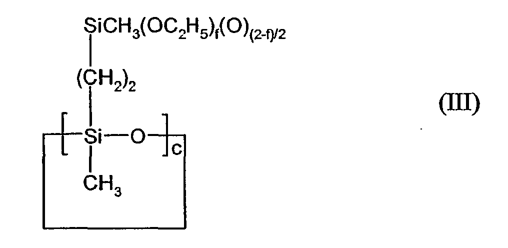 in welcher
   - f: für 1,2 bis 2 steht und
   - c: eine Zahl ≥ 3, bevorzugt eine Zahl von 3 bis 8 ist und
B) mindestens ein lineares Strukturelement der allgemeinen Formel (IV), 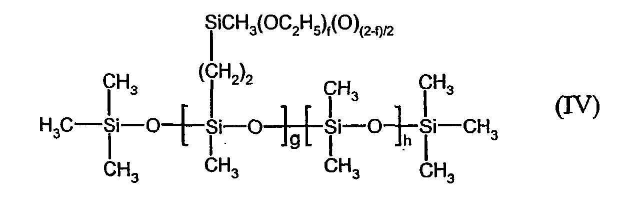
in welcher
- f: für 1,2 bis 2,
- g: für 1 bis 30 und
- h: für 0 bis 20, bevorzugt für 0 bis 10 steht.

Der Gehalt an Ethoxysilylgruppen in den erfindungsgemäßen anorganisch-organischen Zusammensetzungen beträgt mindestens 5,5 mmol/g, bevorzugt mindestens 6,5 mmol/g. Die mittels schneller Gelpermeationschromatographie (SGPC) ermittelte mittlere Molmasse (Gewichtsmittel, M_{w}) beträgt 1.500 bis 20.000 g/mol, bevorzugt 2.000 bis 6.000 g/mol. Der Gehalt an hydrolysierbaren Chlor beträgt 0-100 ppm, bevorzugt 0-50 ppm.

Lösemittefrei liegt die Viskosität der erfindungsgemäßen anorganisch-organischen Zusammensetzungen unter 1000 mPas (23°C), bevorzugt unter 500 mPas (23°C). Die erfindungsgemäßen anorganisch-organischen Zusammensetzungen sind in vielen Lacklösemitteln, wie aromatischen und aliphatischen Kohlenwasserstoffen oder Ketonen, löslich.

Ebenfalls bevorzugt sind lösliche anorganisch-organische Zusammensetzungen oligomerer, multifunktioneller Carbosiloxane enthaltend
A) mindestens ein cyclisches Strukturelement der allgemeinen Formel (V), 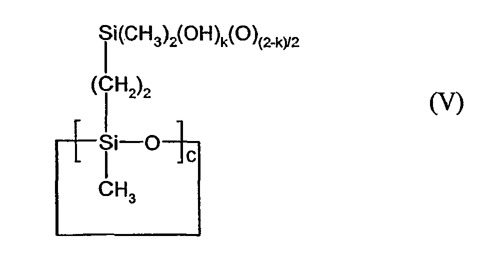 in welcher
   - k: für 0,7 bis 1 steht und
   - c: eine Zahl ≥ 3, bevorzugt eine Zahl von 3 bis 8 ist und
B) mindestens ein lineares Strukturelement der allgemeinen Formel (VI), 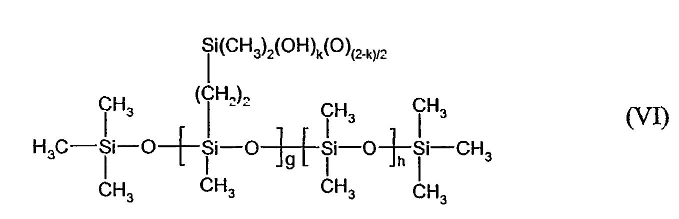 in welcher
   - k: für 0,7 bis 1 steht,
   - g: für 1 bis 30 und
   - h: für 0 bis 20, bevorzugt für 0 bis 10 steht.

Ein weiterer Gegenstand der Erfindung ist ein Verfahren zur Herstellung der erfindungsgemäßen löslichen anorganisch-organischen Zusammensetzungen, dadurch gekennzeichnet, dass in einem ersten Verfahrensschritt eine Mischung (M1) aus linearen und cyclischen Hydrogensiloxanen der allgemeinen Formeln (VII) und (VIII), 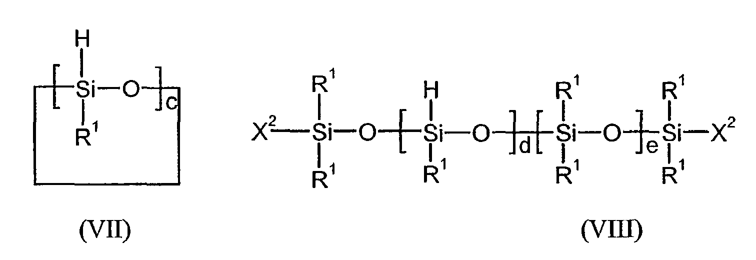 in welchen
- R¹: ein linearer, verzweigter oder cyclischer C₁-C₈-Alkyl-Rest oder C₆-C₁₄-Aryl-Rest, bevorzugt Methyl, Ethyl, n-Propyl, Isopropyl, Butyl, Isobutyl, ter.-Butyl, n-Pentyl, Neopentyl, Hexyl, Heptyl, Octyl, Cyclopentyl, Cyclohexyl, Cycloheptyl sowie Phenyl oder Naphthyl, besonders bevorzugt Methyl oder Ethyl, ganz besonders bevorzugt Methyl ist,
- c: eine Zahl ≥ 3, bevorzugt eine Zahl von 3 bis 8 und
- d: eine Zahl von 1 bis 100, bevorzugt eine Zahl von 1 bis 30
- e: eine Zahl von 0 bis 50, bevorzugt eine Zahl von 0 bis 20 ist und
- X²: für H oder R¹, bevorzugt für R¹ steht,
mit Silanen der allgemeinen Formel (IX),

R³SiR²ₐZ₃₋ₐ (IX)

in welcher
- R²: ein linearer, verzweigter oder cyclischer C₁-C₈-Alkyl-Rest oder C₆-C₁₄-Aryl-Rest, bevorzugt Methyl, Ethyl, n-Propyl, Isopropyl, Butyl, Isobutyl, ter.-Butyl, n-Pentyl, Neopentyl, Hexyl, Heptyl, Octyl, Cyclopentyl, Cyclohexyl, Cycloheptyl sowie Phenyl oder Naphthyl, besonders bevorzugt Methyl oder Ethyl, ganz besonders bevorzugt Methyl ist,
- a: 0 ≤ a ≤ 2, bevorzugt 1 oder 2,
- R³: C₂-C₁₀-Alkenyl, bevorzugt Vinyl ist und
- Z: für eine hydrolysierbare Gruppe, bevorzugt Halogen, besonders bevorzugt für Cl steht,
in Gegenwart eines Pt-Katalysators zu einer Zwischenprodukt-Mischung (M2), enthaltend Verbindungen der allgemeinen Formeln (X) und (XI), 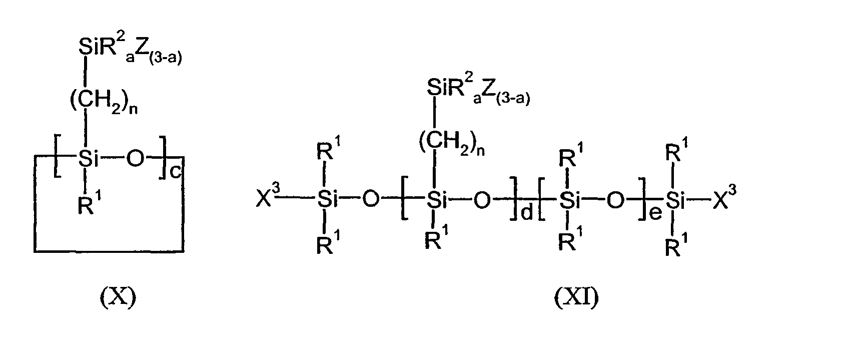 in welchen
R¹, R², Z, a, c, d, n und e die zuvor angegebene Bedeutung haben und
- X³: für R¹ oder für -(CH₂)ₙSiR²ₐZ₍₃₋ₐ₎, bevorzugt für R¹ steht,
umgesetzt wird und
in einem zweiten Reaktionsschritt die Zwischenprodukt-Mischung (M2) einer Alkoholyse oder Hydrolyse mit nachfolgender Kondensation unterzogen wird.

Die Silane der allgemeinen Formel (IX) werden, bezogen auf den Hydrogensilylgehalt, in stöchiometrischen Mengen eingesetzt.

Das erfindungsgemäße Verfahren zeichnet sich insbesondere daduch aus, dass im ersten Schritt, die Zugabe der Mischung (M1) zu dem Silan-Katalysator-Gemisch in einen geschlossenen Behälter erfolgt.

Bevorzugt wird im ersten Schritt des erfindungsgemäßen Verfahrens in einem Rührwerkkessel das Silan der allgemeinen Formel (IX) zusammen mit einem Hydrosilylierungskatalysator und einem Lösemittel unter N₂-Atmosphäre vorgelegt und drucklos auf eine Temperatur erwärmt, die ausreichend ist, um die für die Hydrosilylierungsreaktion nötige Aktivierungsenergie zu liefern, dabei sollte die Temperatur auf mindestens 45°C erhöht werden. Anschließend wird der Rührwerkkessel druckdicht verschlossen und die Mischung (M1) druckgesteuert so zudosiert, dass der Kesselinnendruck maximal 3 bar, bevorzugt maximal 2 bar nicht überschreitet. Nach Beendigung der Zugabe der Mischung (M1) kann gegebenenfalls bei erhöhter Temperatur nachgerührt werden. Das erfindungsgemäße Verfahren gewährleistet eine quantitative Umsetzung, was eine analytische Kontrolle des Umsetzungsgrades und eine Aufarbeitung der Reaktionslösung für weitere Umsetzungen unnötig macht.

Als Hydrosilylierungskatalysatoren können prinzipiell die aus dem Stand der Technik bekannten Katalysatoren eingesetzt werden. Beispiele für Hydrosilylierungskatalysatoren sind Platin-Katalysatoren, wie Chloroplatinsäure, Alkohol-modifizierte Chloroplatinsäure, Platin-Olefin-Komplexe, wie Platin-Vinylmethylcyclosiloxan-Komplexe, Platin-Carbonyl-Komplexe, wie Platin-Carbonyl-Vinylmethylcyclo-siloxan-Komplexe und Platin-Diketonat-Komplexe, wie Platinacetylacetonat. Bevorzugte Katalysatoren sind Platin-Olefin-Komplexe, besonders bevorzugt ist Silopren^{®} U1 Katalysator PT/S (68 %ige Lösung eines mit Cyclo[tetra-(methylvinylsiloxan)]-Liganden substituierten Pt-Komplexes in Iso-Propanol) (GE Bayer Silicones, DE).

Geeignete Lösemittel sind solche, die die Hydrosilylierungsreaktion nicht inhibieren. Dies sind beispielsweise aromatische und aliphatische Kohlenwasserstoffe, wie Toluol, Xylol, Solventnaphtha oder aliphatische Ether. Bevorzugte Lösemittel sind Xylol und tert-Butylmethylether.

Als Mischung (M1) sind solche Mischungen geeignet, die einen SiH-Gehalt von mindestens 10 mmol/g, bevorzugt von mindestens 13 mmol/g enthalten.

Im zweiten Schritt des erfindungsgemäßen Verfahrens erfolgt entweder eine Hydrolyse oder eine Alkoholyse der Mischung (M2) mit anschließender Kondensation. Dabei kann die Mischung (M2) ohne weitere Aufarbeitung eingesetzt werden. Das erfindungsgemäße Verfahren kann somit als Eintopf-Synthese durchgeführt werden.

Die Hydrolyse erfolgt mit Wasser in Gegenwart einer Base oder eines Basengemisches und einem organischen Lösungsmittel oder Lösungsmittelgemisch.

Die Reaktion wird somit als Zweiphasenreaktion durchgeführt, d.h. die Hydrolyse findet an der Phasengrenzfläche eines Zweiphasengemisches statt, bestehend aus einer organischen Phase, in der sich sowohl die SiHalogen-haltigen Edukte als auch die SiOH-funktionellen Produkte lösen, und einer wässrigen Phase, in der Base und das während der Reaktion gebildete Salz gelöst sind.

Als Lösungsmittel der organischen Phase im Sinne der Erfindung kommen alle organischen Lösungsmittel und/oder Lösungsmittelgemische in Betracht, die nicht vollständig mit Wasser mischbar sind. Das Lösungsmittelgemisch kann gegebenenfalls ein- oder mehrphasig sein. Bevorzugt werden aliphatische Ether eingesetzt, besonders bevorzugt tert.-Butylmethylether.

Als Basen im Sinne der Erfindung sind alle wasserlöslichen Basen und deren Gemische, wie z.B. NH₃, Alkalihydroxide, Ammonium- und Alkalicarbonate, -hydrogencarbonate, -phosphate, -hydrogenphosphate und/oder -acetate einsetzbar. Bevorzugt eingesetzt werden NH₃, Alkalihydroxide, Alkalicarbonate und/oder Alkalihydrogencarbonate, besonders bevorzugt NH₃.

Die Basen werden, bezogen auf die bei der Hydrolyse freigesetzte Menge an Säure, vorzugsweise stöchiometrisch oder im Überschuss, bei NH₃ als Base bevorzugt im drei- bis zehnfachen Überschuss, eingesetzt.

Im Fall der Alkoholyse erfolgt der zweite Schritt des erfindungsgemäßen Verfahrens in der Weise, dass die Mischung (M2) in einem Rührwerkkessel vorgelegt und bei Normaldruck ein linearer oder verzweigter C₁-C₄ -Alkohol, beispielsweise Methanol, Ethanol oder Iso-Propanol, bevorzugt Ethanol auf die Reaktionsoberfläche dosiert wird. Zur Steuerung des Kondensationsgrades kann dem C₁-C₄-Alkohol auch eine definierte Menge an Wasser zugesetzt werden. Die Wassermenge wird so bemessen, dass anschließend der Gehalt an Alkoxysilylgruppen und die mittels schneller Gelpermeationschromatographie (SGPC) bestimmte mittlere Molmasse (Gewichtsmittel, M_{w}) der multifunktionellen Carbosiloxane in den erfindungsgemäßen Grenzen liegt. Maximal werden 1000 mmol, bevorzugt maximal 500 mmol Wasser, ganz besonders bevorzugt maximal 300 mmol Wasser pro mol SiCl zugesetzt. Die Dosierung des Alkohols wird so gesteuert, dass die Kesselinnentemperatur 50°C, bevorzugt 40°C nicht überschreitet.

Nach beendeter Alkoholyse wird der überschüssige C₁-C₄-Alkohol und der freigesetzte Halogenwasserstoff bei reduziertem Druck abdestilliert. Gegebenenfalls kann nach der Destillation eine zweite Alkoholyse, bevorzugt mit dem gleichen C₁-C₄-Alkohol durchgeführt werden. Nach der Destillation wird mit einer Base, gegebenenfalls unter erneuter Zugabe des entsprechenden C₁-C₄-Alkylalkohols, neutralisiert. Als Neutralisierungsmittel sind beispielsweise Alkalicarbonate geeignet, bevorzugt wird Soda eingesetzt. Es hat sich als vorteilhaft erwiesen, wenn die Neutralisation bei erhöhter Temperatur, bevorzugt bei einer Temperatur von mindestens 40°C, unter Zusatz eines C₁-C₄-Alkylalkohols als Lösevermittler durchgeführt wird. Unter diesen Bedingungen ist die Neutralisation in 30 bis 60 Minuten beendet. Es fällt ein feinteiliger, sehr gut filtrierbarer Neutralisationsrückstand aus. Gegebenenfalls wird noch vorhandenes Lösemittel abdestilliert und der Neutralisationsrückstand abfiltriert.

Wird im zweiten Schritt des erfindungsgemäßen Verfahrens eine Alkoholyse durchgeführt, ist als Silan der allgemeinen Formel (IX) Methylvinyldichlorsilan bevorzugt. Zur Herstellung erfindungsgemäßer hydroxyfunktioneller (Hydrolyse) Carbosiloxane ist als Silan der allgemeinen Formel (IX) Dimethylvinylchlorsilan bevorzugt.

Die Ausbeute an dem erfindungsgemäßen multifunktionellen Carbosiloxan beträgt, bezogen auf die eingesetzte Menge an der Mischung (M1), mindestens 90 %.

Mit der erfindungsgemäßen Reaktionsführung der Hydrosilylierung (Verfahrensschritt 1) wird sichergestellt, dass die Umsetzung quantitativ verläuft. Im Gegensatz zu Verfahren des Standes der Technik ist eine analytische Kontrolle des Umsetzungsgrades somit nicht notwendig. Ein Nachdosieren einer Reaktionskomponente, verbunden mit einer zusätzlichen Reaktionszeit, entfällt. Auch der Einsatz eines Überschusses einer Reaktionskomponente und der damit verbundene Destillationsschritt nach Beendigung der Reaktion wird eingespart.

Das erfindungsgemäße zweite Verfahrensschritt hat gegenüber dem Stand der Technik den Vorteil, dass die Alkoholyse und Kondensation bei Normaldruck durchgeführt werden kann und die Zugabe des Alkohols auf, statt unter die Reaktionsoberfläche erfolgt. Der apparative Aufwand des erfindungsgemäßen Verfahrens ist im Vergleich zum Stand der Technik deutlich reduziert. Ein weiterer Vorteil entsteht durch das im Vergleich zum Stand der Technik verbesserte Neutralisationsverfahren. Die Filtrationszeit wird durch den feinteiligen Neutralisationsrückstand beschleunigt, die Ausbeuteverluste werden minimiert.

Die Vorteile des erfindungsgemäßen Verfahrens lassen sich generell bei der Herstellung multifunktioneller alkoxy- und/oder hydroxyfunktioneller Carbosiloxane nutzen.

Ein weiterer Gegenstand der Erfindung ist die Verwendung der erfindungsgemäßen anorganisch-organischen Zusammensetzungen oligomerer, multifunktioneller Carbosiloxane als Reaktionspartner in kondensationsvernetzenden Siloxanmassen sowie zur Herstellung oder Modifizierung von anorganischen oder organischen Oberflächenbeschichtungsmitteln.

Ebenfalls Gegenstand der vorliegenden Erfindung sind anorganische oder organischen Oberflächenbeschichtungsmittel sowie kondensationsvernetzenden Siloxanmassen, enthaltend die erfindungsgemäßen Zusammensetzungen.

Beschichtungsmittel, enthaltend die erfindungsgemäßen Zusammensetzungen können organofunktionelle Metallalkoholate und/oder deren Hydrolysate oder Kondensate, organische Polymere oder anorganische Nanoteilchen enthalten. Die daraus resultierenden Beschichtungen zeichnen sich durch eine besonders hohe mechanische Beständigkeit aus und können beispielsweise zur Beschichtung von Kunststoffen oder als zusätzliche Lackschicht auf organischen Beschichtungen eingesetzt werden. Es ist ebenfalls möglich, fluorhaltige Komponenten den Beschichtungsmitteln zuzusetzen, wodurch hydrophobe und/oder olephobe Beschichtungen hergestellt werden können. Diese hydrophoben und/oder oleophoben Beschichtungszusammensetzungen finden beispielsweise als Antihaftschicht Verwendung.

### Beispiele

Die in den erfindungsgemäßen Beispielen eingesetzte Mischung (M1) aus 28 % linearen und 72 % cyclischen Hydrogensiloxanen und einem Si-H Gehalt von 15,1 mmol/g wurde von GE-Bayer Silicones, Deutschland unter der Bezeichnung G-Destillat bezogen. Die Mischung ist ein Zwangsanfallsprodukt, das bei der Herstellung von SiMeH-haltigen Silikonölen anfällt.

1,3,5,7-Tetramethyl-1,3,5,7-tetravinylcyclotetrasiloxan, Methylvinyldichlorsilan, Dimethylvinylchlorsilan, Dichlormethylsilan, Vinyltriethoxysilan und 1,3,5,7,9-Pentamethyl-cyclopentasiloxan wurden von ABCR, Deutschland bezogen und ohne Vorbehandlung eingesetzt.

Der Platindivinylsiloxan-Komplex mit einem Platingehalt von 3 bis 3,5 % wurde von Hüls America Inc. bezogen (Hüls PC 072, 3 bis 3,5 % Pt. in Xylol). Silopren^{®} U Katalysator PT/S (68%ige Lösung eines mit Cyclo[tetra-(methylvinylsiloxan)]-Liganden substituierten Pt-Komplexes in Iso-Propanol) wurde von GE Bayer Silicones, Deutschland bezogen.

Bei den eingesetzten Lösemitteln handelt es sich ausschließlich um technische Ware, die ohne weitere Vorbehandlung eingesetzt wurde.

### Herstellung eines oligomeren ethoxyfunktionellen Carbosiloxans

### Beispiel 1: Erfindungsgemäße Hydrosilylierung

1693 g (12,0 mol) Methylvinyldichlorsilan, 630 g Xylol und 166 mg Platinkatalysator (Silopren^{®} U Katalysator PT/S) wurden in einer druckfesten Apparatur unter Rühren auf 80°C erwärmt. Die Apparatur wurde druckdicht verschlossen. Anschließend wurden insgesamt 794,7 g einer Mischung M1, zusammengesetzt aus 28 % linearen und 72 % cyclischen Hydrogensiloxanen und einem Si-H Gehalt von 15,1 mmol/g (insgesamt 12 mol SiH), so in die Reaktionsmischung eingeleitet, dass der Druck nicht über 3 bar anstieg. Es fand eine exotherme Reaktion statt. Nach Beendigung der Zugabe wurde 2 Stunden bei 130°C nachgerührt, auf Raumtemperatur abgekühlt und mit Stickstoff entspannt.

Nach der Umsetzung konnten im ¹H-NMR [CDCl₃] keine SiVinyl- oder SiH-Gruppen nachgewiesen werden.

### Beispiel 2: Erfindungsgemäße Alkoholyse und Kondensation

Ohne weitere Aufarbeitung der in Beispiel 1 hergestellten Reaktionslösung wurden unter Rühren 2177 g Ethanol so auf die Oberfläche der Reaktionsmischung getropft, dass die Temperatur nicht über 40°C anstieg. Anschließend wurde bis zu einem Druck von 50 mbar und einer Temperatur von 60°C destilliert. Der Vorgang wurde mit weiteren 1010 g Ethanol wiederholt. Zum Schluss wurde mit Soda 30 Minuten bei 60°C neutralisiert, bei Normaldruck bis 130°C ausgeheizt und filtriert.

Es fielen 2552 g (96,7 % d. Theorie, bezogen auf Einwaage an Mischung M1 in Beispiel 1) eines klaren, schwach gelben multifunktionellen Carbosiloxans mit einer Viskosität von 91 mPas, einer Dichte von 1,0 g/ml und einer Restmenge an hydrolysierbarem Chlor von 12 ppm an. Mittels schneller Gelpermeationschromatographie (SGPC) mit Dichlormethan als Lösemittel und IR-Detektor wurde die Molmassenverteilung ermittelt. Das Produkt hatte eine mittlere Molmassenverteilung mit einem Zahlenmittel (Mₙ) von 1830 g/mol und einem Gewichtsmittel (M_{w}) von 5730 g/mol. Im ¹H-NMR [CDCl₃] wurde ein Gehalt von 8,27 mmol SiOEt/g gefunden.

### Beispiel 3: Erfindungsgemäße Alkoholyse und Kondensation

Unter Rühren wurden zu 1000 g der gemäß Beispiel 1 hergestellten Lösung insgesamt 725 g Ethanol und 18 g Wasser so auf die Oberfläche der Reaktionsmischung getropft, dass die Temperatur nicht über 40°C anstieg. Anschließend wurde bis zu einem Druck von 50 mbar und einer Temperatur von 60°C destilliert. Der Vorgang wurde mit weiteren 350 g Ethanol wiederholt. Zum Schluss wurde mit Soda 30 Minuten bei 60°C neutralisiert, bei Normaldruck bis 130°C ausgeheizt und filtriert.

Es wurden 832 g (98,2 % d. Theorie) eines klaren, schwach gelben Carbosiloxans mit einer Viskosität von 245 mPas, einer Dichte von 1,01 g/ml und einer Restmenge an hydrolysierbarem Chlor von 7 ppm erhalten. Mittels schneller Gelpermeationschromatographie (SGPC) mit Dichlormethan als Lösemittel und IR-Detektor wurde die Molmassenverteilung ermittelt. Das Produkt hatte eine mittlere Molmassenverteilung mit einem Zahlenmittel (Mₙ) von 2150 g/mol und einem Gewichtsmittel (M_{w}) von 15.530 g/mol. Im ¹H-NMR [CDCl₃] wurde ein Gehalt von 7,47 mmol SiOEt/g gefunden.

### Herstellung oligomerer hydroxyfunktioneller Carbosiloxane

### Beispiel 4: Erfindungsgemäße Hydrosilylierung

241 g (2,0 mol) Dimethylvinylchlorsilan, 105 g Xylol und 24 mg Platinkatalysator (Silopren^{®} U Katalysator PT/S) wurden in einer druckfesten Apparatur unter Rühren auf 50°C erwärmt. Die Apparatur wurde druckdicht verschlossen. Hierzu wurden 138 g einer Mischung, zusammengesetzt aus 32 % linearen und 68 % cyclischen Hydrogensiloxanen und einem Si-H Gehalt von 14,5 mmol/g (insgesamt 2 mol SiH), so in die Reaktionsmischung eingeleitet, dass der Druck nicht über 3 bar anstieg. Es fand eine exotherme Reaktion statt. Nach Beendigung der Zugabe wurde 2 Stunden bei 60°C nachgerührt, auf Raumtemperatur abgekühlt und mit Stickstoff entspannt.

Nach der Umsetzung konnten im ¹H-NMR [CDCl₃] keine SiVinyl- oder SiH-Gruppen nachgewiesen werden.

### Beispiel 5: Hydrolyse und Kondensation gemäß US-A 5.880.305

340 g einer wässrigen Ammoniaklösung mit einem Gehalt an 25 Gew.-% Ammoniak, 130 g Wasser und 400 g *tert*.-Butylmethylether wurden in einem Rührwerkkessel mit Bodenablassventil vorgelegt. Hierzu wurden unter Rühren insgesamt 484 g einer gemäß Beispiel 4 hergestellten Zwischenstufe getropft. Anschließend wurde 1 Stunde nachgerührt und die wässrige Phase abgetrennt. Die organische Phase wurde mit Wasser neutral gewaschen und mit 350 n-Butanol versetzt. Es wurde unter Vakuum bis zu einem Festkörpergehalt von 60 Gew.-% destilliert.

Es wurden 502 g (93 % d. Theorie) einer 60 %igen Lösung eines hydroxyfunktionellen Carbosiloxans in n-Butanol mit einer Viskosität von 55 mPas, einer Dichte von 0,93 g/ml und einer Restmenge an hydrolysierbarem Chlor von 15 ppm erhalten. Mittels schneller Gelpermeationschromatographie (SGPC) mit Dichlormethan als Lösemittel und IR- und RI-Detektor wurde die Molmassenverteilung ermittelt. Das Produkt hatte eine mittlere Molmassenverteilung mit einem Zahlenmittel (Mₙ) von 1134 g/mol und einem Gewichtsmittel (M_{w}) von 2130 g/mol. Im ¹H-NMR [d₆]-DMSO wurde ein Gehalt von 3,8 mmol SiOH/g gefunden.

### Vergleichsbeispiele

In Vergleichsbeispiel 1 und 2 erfolgt die Herstellung eines oligomeren, multifunktionellen, cyclischen Carbosiloxans (Kondensationsprodukt von 1,3,5,7-Tetramethyl-1,3,5,7-tetra-(2-(diethoxymethylsilyl)-ethylen)-cyclotetrasiloxan) gemäß Beispiel 2 aus US-A 6,136,939.

### Vergleichsbeispiel 1: Hydrosilylierung

Unter Stickstoffatmosphäre wurden 516 g (1,5 mol) reines 1,3,5,7-Tetramethyl-1,3,5,7-tetravinylcyclotetrasiloxan, 288 g Xylol und 80 mg Platinkatalysator (Silopren^{®} U Katalysator PT/S) in einer Rührapparatur mit Rückflusskühler und Tropftrichter vorgelegt und auf 80°C erwärmt. Unter Rühren wurden 690 g (6,0 mol) Dichlormethylsilan zugetropft. Es fand eine exothenne Reaktion statt. Nach Beendigung der Zugabe wurde 2 Stunden bei 130°C nachgerührt, auf Raumtemperatur abgekühlt und mit Stickstoff entspannt. Nach der Umsetzung wurden mittels ¹H-NMR [CDCl₃] 7731 ppm SiVinyl-Gruppen nachgewiesen. Dies entspricht 0,21 mol SiVinyl-Gruppen, bzw. 3,5 mol-% nicht umgesetzter SiVinyl-Gruppen. Zur vollständigen Umsetzung aller SiVinyl-Gruppen mussten 24,2 g (0,21 mol) Dichlormethylsilan nachdosiert und 2 Stunden bei 130°C nachgerührt werden. Nach der erneuten Hydrosilylierung wurden im ¹H-NMR [CDCl₃] keine SiVinyl-Gruppen nachgewiesen.

### Vergleichsbeispiel 2: Alkoholyse und Kondensation

Zu 600 g der gemäß Vergleichsbeispiel 1 erhaltenen Zwischenstufe wurden bei einem Vakuum von 500 mbar 1245 g Ethanol über ein Tauchrohr unter die Flüssigkeitsoberfläche eingeleitet. Anschließend wurde bis zu einem Druck von 10 mbar und einer Temperatur von 60°C destilliert und mit N₂ belüftet. Dann wurde bei einem Vakuum von 500 mbar weitere 623 g Ethanol über ein Tauchrohr unter die Flüssigkeitsoberfläche eingeleitet. Anschließend wurde bis zu einem Druck von 10 mbar und einer Temperatur von 60°C destilliert und mit N₂ belüftet. Über ein Gaseinleitungsrohr wurde bis zur Sättigung Ammoniak eingeleitet und 4 Stunden gerührt. Anschließend wurde überschüssiges Ammoniak unter leichtem Vakuum entfernt und Ammoniumchlorid abfiltriert. Das Filtrat wurde ausgeheizt, mit Filterhilfsmittel (Kieselgur) versetzt und filtriert .

Es wurden 1319 g (68 % d. Theorie bezogen auf die Einwaage an 1,3,5,7-Tetramethyl-1,3,5,7-tetravinylcyclotetrasiloxan in Vergleichsbeispiel 1) eines klaren, schwach gelben Carbosiloxans mit einer Viskosität von 80 mPas, einer Dichte von 1,0 g/ml und einer Restmenge an hydrolysierbarem Chlor von 7 ppm erhalten. Mittels schneller Gelpermeationschromatographie (SGPC) mit Dichlormethan als Lösemittel und IR- und RI-Detektor wurde die Molmassenverteilung ermittelt. Das Produkt hatte eine mittlere Molmassenverteilung mit einem Zahlenmittel (Mₙ) von 1530 g/mol und einem Gewichtsmittel (M_{w}) von 3355 g/mol. Im ¹H-NMR [CDCl₃] wurde ein Gehalt von 8,4 mmol SiOEt/g gefunden.

### Vergleichsbeispiel 3 Herstellung eines monomeren cyclischen Carbosiloxans gemäß Beispiel 10 in WO-A 94/06807

Unter Stickstoffatmosphäre wurden zu einer Mischung, bestehend aus 10,3 g (0,0527 mol) Vinyltriethoxysilan (10 % Überschuss Vinyltriethoxysilan) und 12 Tropfen eines Platindivinylsiloxan-Komplexes (Hüls^{®} PC 072, 3-3,5 % Pt., 5:1 mit Xylol verdünnt) insgesamt 2,89 g (0,0096 mol entspricht 0,048 mol SiH) 1,3,5,7,9-Pentamethyl-cyclopentasiloxan getropft. Anschließend wurde 6 Stunden bei 90°C gerührt. Nach Beendigung der Reaktion wurde auf Raumtemperatur abgekühlt, Xylol sowie der Überschuss an Vinyltriethoxysilan im Ölpumpenvakuum abdestilliert und mit Stickstoff entspannt. Es wurden 8.53 g (0,0068 mol, 71 % d. Theorie) einer klaren, schwach gelben Flüssigkeit erhalten.

### Herstellung von anorganischen Oberflächenbeschichtungsmitteln (erfindungsgemäß)

### Beispiel 6

Unter Rühren wurde zu einer Mischung, bestehend aus 4,2 g eines gemäß Beispiel 2 hergestellten oligomeren ethoxyfunktionellen Carbosiloxans und 0,42 g eines gemäß Beispiel 5 hergestellten oligomeren hydroxyfunktionellen Carbosiloxans, 6,2 g eines Kondensationsproduktes von Tetraethoxysilan in Form einer 50 gew.-%igen Lösung in n-Butanol und 3,0 g einer 2 %igen Lösung von para-Toluolsulfonsäure getropft und homogen verrührt. Die Lösung wurde mit einem Rakel in einer Schichtdicke von 30 µm auf eine entfettete Glasplatte aufgezogen und 30 Minuten bei 130°C gehärtet.

Es resultierte eine transparente, harte Beschichtung, die sehr beständig gegenüber organischem Lösemittel ist.

### Beispiel 7

10 g eines gemäß Beispiel 2 hergestellten oligomeren ethoxyfunktionellen Carbosiloxans wurden homogen mit 2,4 g eines Kondensationsproduktes von Tetraethoxysilan in Form einer 50 gew.-%igen Lösung in n-Butanol, 2,0 g eines α,ω-hydroxyfunktionellen Polydimethylsiloxans mit einem OH-Gehalt von ca. 7,5 % und 0,2 g einer ca. 2 %igen Lösung von para-Toluolsulfonsäure in n-Butanol verrührt. Die Lösung wurde mit einem Rakel in einer Schichtdicke von 100 µm auf eine entfettete Glasplatte aufgetragen und 24 Stunden bei Raumtemperatur getrocknet. Die transparente Beschichtung wurde von einem Permanentmarker der Fa. Edding (Edding 85C) nicht benutzt. Der Marker konnte 24 Stunden nach Auftragen mit einem Lappen ohne Zuhilfenahme von Reinigungsmittel entfernt werden.

## Patentansprüche

1. Lösliche anorganisch-organische Zusammensetzungen oligomerer, multifunktioneller Carbosiloxane enthaltend
A) mindestens ein cyclisches Strukturelement der allgemeinen Formel (I), 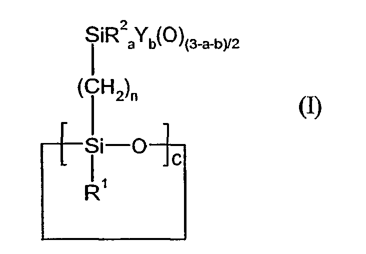 in welcher
R¹, R² lineare, verzweigte oder cyclische C₁-C₈-Alkyl-Reste und/oder C₆-C₁₄-Aryl-Reste sind, wobei R¹ und R² innerhalb eines Strukturelementes gleich oder ungleich sein können,
Y OH oder C₁-C₄-Alkoxy ist,
a 0 ≤ a ≤ 2,
b 0,5 ≤ b ≤ 2,8 und a + b ≤ 3 ist,
c eine Zahl ≥ 3,
n eine Zahl von 2 bis 10 ist und
B) mindestens ein lineares Strukturelement der allgemeinen Formel (II), 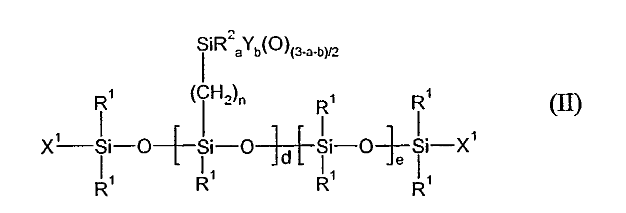
in welcher
R¹, R², a, b, Y die in der allgemeinen Formel (I) angegebene Bedeutung haben,
X¹ R¹ oder -(CH₂)ₙSiR²ₐY_{b}(O)_{(3-a-b)/2},
d eine Zahl von 1 bis 100,
e eine Zahl von 0 bis 50 ist.

2. Lösliche anorganisch-organische Zusammensetzungen oligomerer, multifunktioneller Carbosiloxane gemäß Anspruch 1 enthaltend
A) mindestens ein cyclisches Strukturelement der allgemeinen Formel (III) 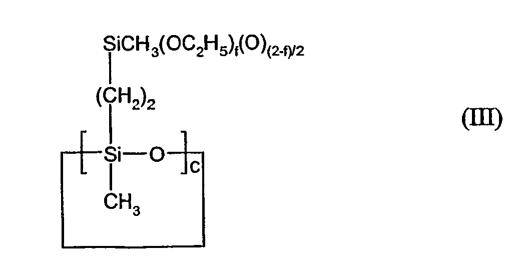 in welcher
f für 1,2 bis 2 steht,
c eine Zahl ≥ 3 ist und
B) mindestens ein lineares Strukturelement der allgemeinen Formel (IV), 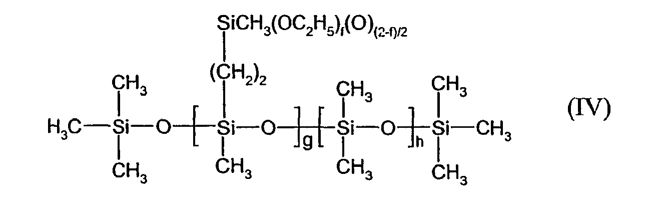
in welcher
f für 1,2 bis 2,
g für 1 bis 30 und
h für 0 bis 20 steht.

3. Lösliche anorganisch-organische Zusammensetzungen oligomerer, multifunktioneller Carbosiloxane gemäß Anspruch 1 enthaltend
A) mindestens ein cyclisches Strukturelement der allgemeinen Formel (V) 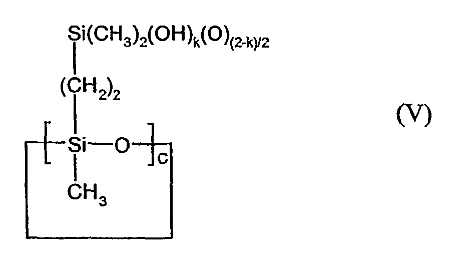 in welcher
k für 0,7 bis 1 steht,
c eine Zahl ≥ 3 ist und
B) mindestens ein lineares Strukturelement der allgemeinen Formel (VI), 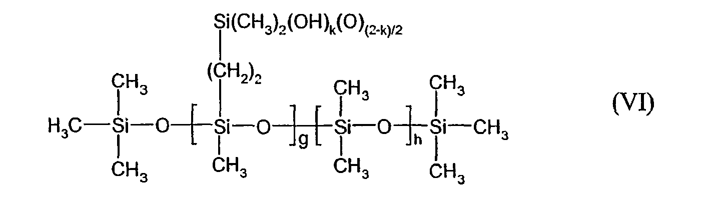
in welcher
k für 0,7 bis 1 steht,
g für 1 bis 30 und
h für 0 bis 20 steht.

4. Verfahren zur Herstellung löslicher anorganisch-organischen Zusammensetzungen gemäß Anspruch 1, **dadurch gekennzeichnet, dass** in einem ersten Verfahrensschritt eine Mischung (M1) aus linearen und cyclischen Hydrogensiloxanen der allgemeinen Formeln (VII) und (VIII), 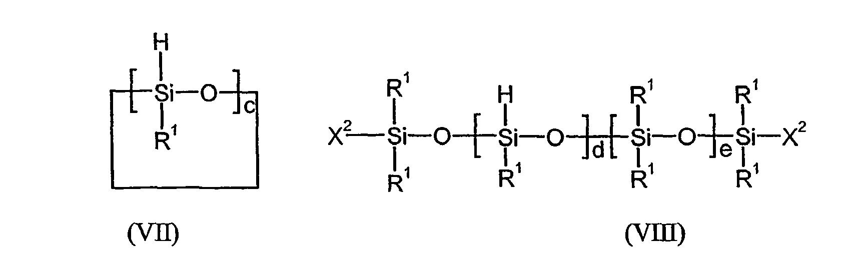 in welchen
R¹ ein linearer, verzweigter oder cyclischer C₁-C₈-Alkyl-Rest und/oder C₆-C₁₄-Aryl-Rest,
c eine Zahl ≥ 3 und
d eine Zahl von 1 bis 100,
e eine Zahl von 0 bis 50 ist und
X² für H oder R¹ steht,
mit Silanen der allgemeinen Formel (IX),
R³SiR²ₐZ₃₋ₐ (IX)
in welcher
R² ein linearer, verzweigter oder cyclischer C₁-C₈-Alkyl-Rest und/oder C₆-C₁₄-Aryl-Rest,
a 0 ≤ a ≤ 2,
R³ C₂-C₁₀-Alkenyl ist und
Z für eine hydrolysierbare Gruppe steht,
in Gegenwart eines Pt-Katalysators zu einer Zwischenprodukt-Mischung (M2), enthaltend Verbindungen der allgemeinen Formeln (X) und (XI), 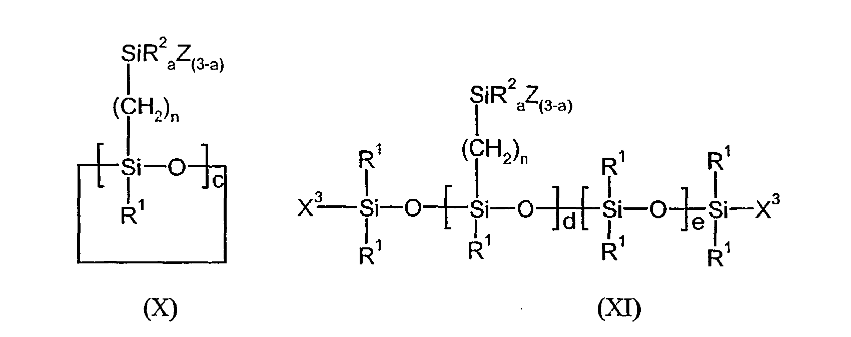 in welchen
R¹, R², Z, a, c, d, n und e die zuvor angegebene Bedeutung haben und
X³ für R¹ oder für -(CH₂)ₙSiR²ₐZ₍₃₋ₐ₎ steht,
umgesetzt wird und
in einem zweiten Reaktionsschritt die Zwischenprodukt-Mischung (M2) einer Alkoholyse oder Hydrolyse mit nachfolgender Kondensation unterzogen wird.

5. Verfahren gemäß Anspruch 4, **dadurch gekennzeichnet, dass** im ersten Schritt, die Zugabe der Mischung (M1) zu dem vorgelegten Silan-Katalysator-Gemisch in einen geschlossenen Behälter erfolgt.

6. Verfahren gemäß Anspruch 4, **dadurch gekennzeichnet, dass** die Reaktion als Eintopf-Synthese durchgeführt wird.

7. Verwendung löslicher anorganisch-organischer Zusammensetzungen gemäß Anspruch 1 als Reaktionspartner in kondensationsvernetzenden Siloxanmassen.

8. Verwendung löslicher anorganisch-organischer Zusammensetzungen gemäß Anspruch 1 zur Herstellung oder Modifizierung von anorganischen oder organischen Oberflächenbeschichtungsmitteln.

9. Kondensationsvernetzende Siloxanmassen enthaltend lösliche anorganisch-organische Zusammensetzungen gemäß Anspruch 1.

10. Anorganische oder organischen Oberflächenbeschichtungsmittel enthaltend lösliche anorganisch-organische Zusammensetzungen gemäß Anspruch 1.

## Claims

1. Soluble organic-inorganic compositions of oligomeric polyfunctional carbosiloxanes comprising
A) at least one cyclic structural element of the general formula (I), 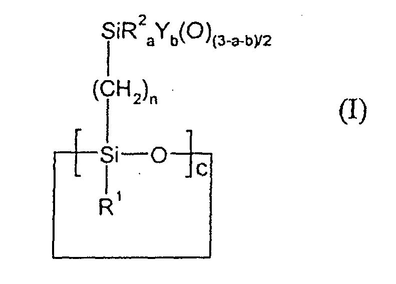 in which
R¹ and R² are linear, branched or cyclic C₁-C₈ alkyl radicals and/or C₆-C₁₄ aryl radicals, it being possible for R¹ and R² to be identical or non-identical within one structural element,
Y is OH or C₁-C₄ alkoxy,
a is such that 0 ≤ a ≤ 2,
b is such that 0.5 ≤ b ≤ 2.8 and a + b ≤ 3,
c is a number ≥ 3,
n is a number from 2 to 10, and
B) at least one linear structural element of the general formula (II), 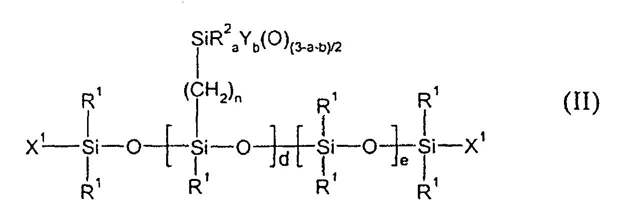
in which
R¹, R², a, b and Y have the definition indicated in the general formula (I),
X¹ is R¹ or -(CH₂)ₙSiR²ₐY_{b}(O)_{(3-a-b)/2},
d is a number from 1 to 100,
e is a number from 0 to 50.

2. Soluble organic-inorganic compositions of oligomeric polyfunctional carbosiloxanes according to Claim 1 comprising
A) at least one cyclic structural element of the general formula (III) 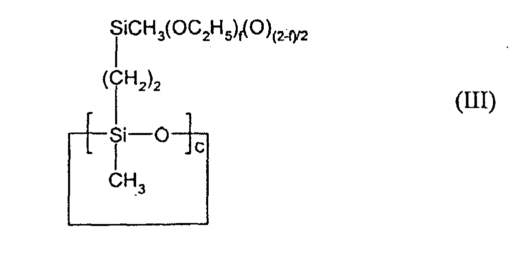 in which
f stands for 1.2 to 2,
c is a number ≥ 3 and
B) at least one linear structural element of the general formula (IV), 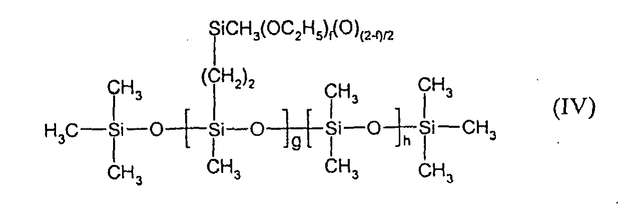
in which
f stands for 1.2 to 2,
g stands for 1 to 30 and
h stands for 0 to 20.

3. Soluble organic-inorganic compositions of oligomeric polyfunctional carbosiloxanes according to Claim 1 comprising
A) at least one cyclic structural element of the general formula (V) 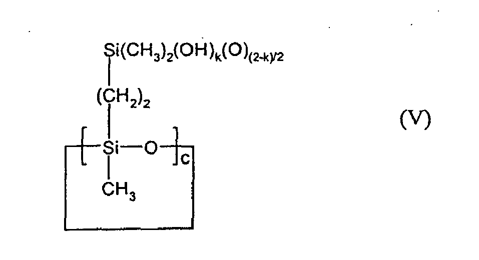 in which
k stands for 0.7 to 1,
c is a number ≥ 3 and
B) at least one linear structural element of the general formula (VI), 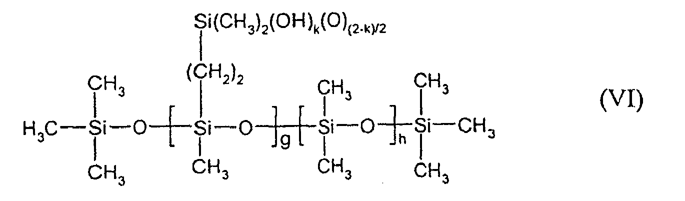
in which
k stands for 0.7 to 1,
g stands for 1 to 30 and
h stands for 0 to 20.

4. Process for preparing soluble organic-inorganic compositions according to Claim 1, **characterized in that** in a first process step a mixture (M1) of linear and cyclic hydrosiloxanes of the general formulae (VII) and (VIII), 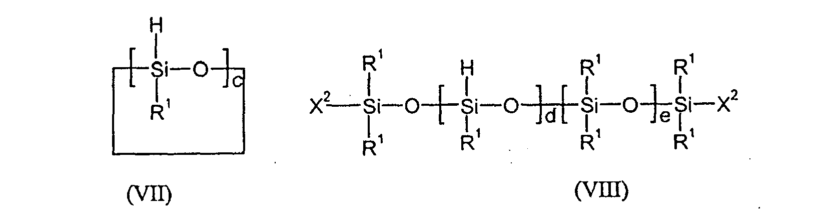 in which
R¹ is a linear, branched or cyclic C₁-C₈ alkyl radical and/or C₆-C₁₄ aryl radical,
c is a number ≥ 3 and
d is a number from 1 to 100,
e is a number from 0 to 50 and
X² stands for H or R¹,
is reacted with silanes of the general formula (IX),
R³SiR²ₐZ₃₋ₐ (IX)
in which
R² is a linear, branched or cyclic C₁-C₈ alkyl radical and/or C₆-C₁₄ aryl radical,
a is such that 0 ≤ a ≤ 2,
R³ is C₂-C₁₀ alkenyl and
Z stands for a hydrolysable group,
in the presence of a Pt catalyst to give a mixture (M2) of intermediates, comprising compounds of the general formulae (X) and (XI), 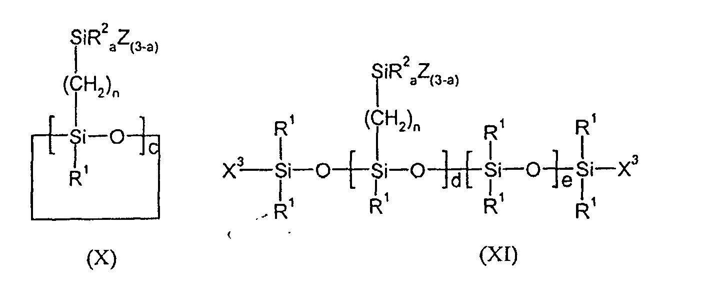 in which
R¹, R², Z, a, c, d, n and e are as defined above and
X³ stands for R¹ or -(CH₂)ₙSiR²ₐZ₍₃₋ₐ₎,
and
in a second reaction step the mixture (M2) of intermediates is subjected to an alcoholysis or hydrolysis with subsequent condensation.

5. Process according to Claim 4, **characterized in that** in the first step the mixture (M1) is added to the initial silane/catalyst mixture charge in a closed vessel.

6. Process according to Claim 4, **characterized in that** the reaction is carried out as a one-pot synthesis.

7. Use of soluble organic-inorganic compositions according to Claim 1 as reaction partners in condensation-crosslinking siloxane compositions.

8. Use of soluble organic-inorganic compositions according to Claim 1 for preparing or modifying organic or inorganic surface coating materials.

9. Condensation-crosslinking siloxane compositions comprising soluble organic-inorganic compositions according to Claim 1.

10. Organic or inorganic surface coating materials comprising soluble organic-inorganic compositions according to Claim 1.

## Revendications

1. Compositions inorganiques-organiques solubles de carbosiloxanes multifonctionnels, oligomères, contenant
A) au moins un élément de structure cyclique de la formule générale (I) : 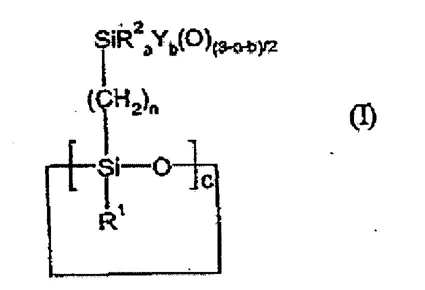 dans laquelle
R¹, R² sont des restes alcoyle en C₁-C₈ linéaires, ramifiés ou cycliques et/ou des restes aryle en C₆-C₁₄, où R¹ et R² peuvent être identiques ou différents au sein d'un élément de structure,
Y est OH ou alcoxy en C₁-C₄,
a est tel que 0 ≤ a ≤ 2,
b est tel que 0,5 ≤ b ≤ 2,8 et a+ b ≤ 3,
c est un nombre ≥ 3,
n est un nombre allant de 2 à 10, et
B) au moins un élément de structure linéaire de la formule générale (II) : 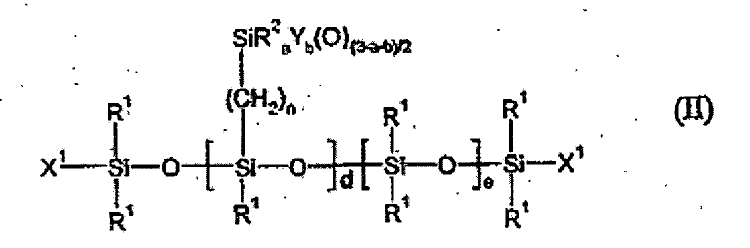
dans laquelle
R¹, R², a, b, Y ont la signification donnée pour la formule générale (I),
X¹ est R¹ ou -(CH₂)ₙSiR²ₐY_{b}(O)_{(3-a-b)/2},
d est un nombre allant de 1 à 100,
e est un nombre allant de 0 à 50.

2. Compositions inorganiques-organiques solubles de carbosiloxanes multifonctionnels, oligomères, selon la revendication 1, contenant
A) au moins un élément de structure cyclique de la formule générale (III) : 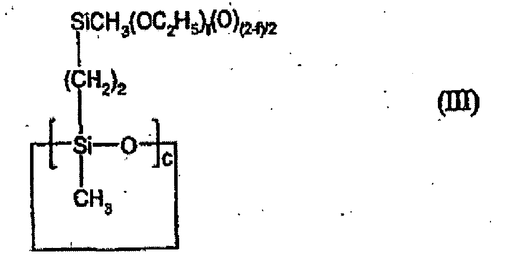 dans laquelle
f représente 1,2 à 2,
c est un nombre ≥ 3,
B) au moins un élément de structure linéaire de la formule générale (IV) : 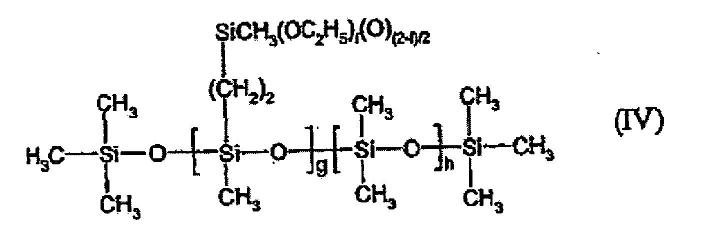
dans laquelle
f représente 1,2 à 2,
g représente 1 à 30, et
h représente 0 à 20.

3. Compositions inorganiques-organiques solubles de carbosiloxanes multifonctionnels, oligomères, selon la revendication 1, contenant
A) au moins un élément de structure cyclique de la formule générale (V) : 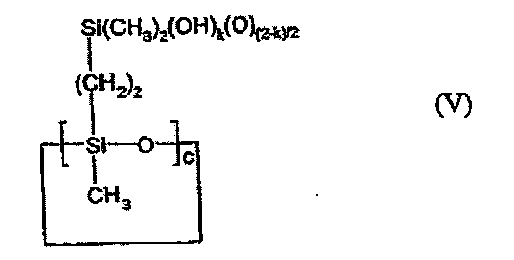 dans laquelle
k représente 0,7 à 1,
c est un nombre ≥ 3,
B) au moins un élément de structure linéaire de la formule générale (VI) : 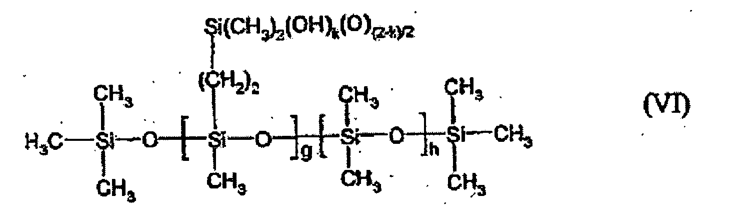
dans laquelle
k représente 0,7 à 1,
g représente 1 à 30, et
h représente 0 à 20.

4. Procédé de préparation des compositions inorganiques-organiques solubles selon la revendication 1, **caractérisé en ce que** dans une première étape de procédé, on fait réagir un mélange (M1) d'hydrogénosiloxanes linéaires et cycliques des formules générales (VII) et (VIII) : 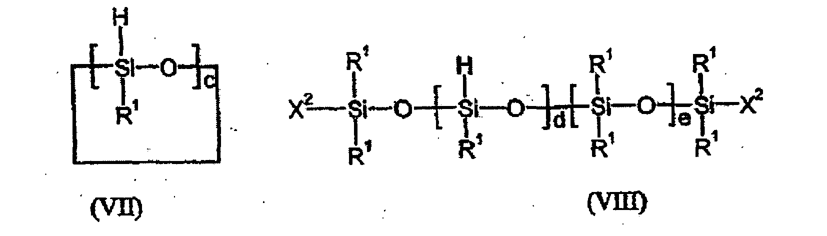 dans lesquelles
R² est un reste alcoyle en C₁-C₈ linéaire, ramifié ou cyclique et/ou un reste aryle en C₆-C₁₄,
c est un nombre ≥ 3, et
d est un nombre allant de 1 à 100,
e est un nombre allant de 0 à 50, et
X² est H ou R¹,
avec des silanes de la formule générale (IX) :
R³SiR²ₐZ₃₋ₐ (IX)
dans laquelle
R₂ est un reste alcoyle en C₁-C₈ linéaire, ramifié ou cyclique et/ou un reste aryle en C₆-C₁₄,
a est tel que 0 ≤ a ≤ 2,
R³ est alcényle en C₂-C₁₀, et
Z représente un radical hydrolysable, en présence d'un catalyseur au Pt, pour obtenir un mélange de produits intermédiaires (M2), contenant des composés des formules générales (X) et (XI) : 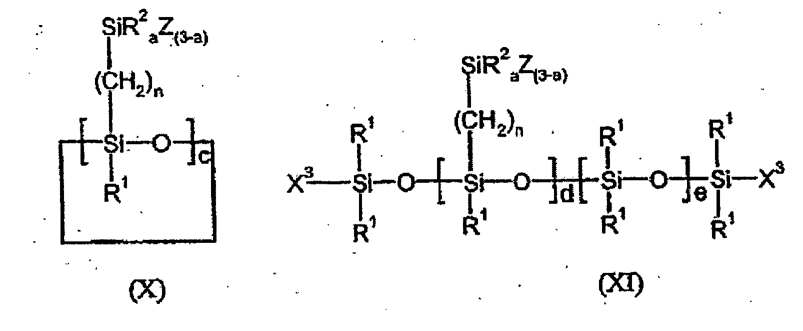 dans lesquelles
R¹, R², Z, a, c, d, n et e ont la signification donnée précédemment,
X³ représente -(CH₂)ₙSiR²ₐZ₍₃₋ₐ₎,
et
dans une deuxième étape de réaction, le mélange de produits intermédiaire (M2) est soumis à une alcoolyse ou une hydrolyse avec condensation subséquente.

5. Procédé selon la revendication 4, **caractérisé en ce que** dans la première étape, l'addition du mélange (M1) au mélange silane-catalyseur prédisposé est réalisée dans un récipient fermé.

6. Procédé selon la revendication 4, **caractérisé en ce que** la réaction est réalisée comme une synthèse « one pot ».

7. Utilisation des compositions inorganiques-organiques solubles selon la revendication 1, comme partenaire de réaction dans des masses de siloxanes réticulant par condensation.

8. Utilisation des compositions inorganiques-organiques solubles selon la revendication 1, pour la préparation ou la modification d'agents de revêtement de surfaces, inorganiques ou organiques.

9. Masses de siloxanes réticulant par condensation, contenant les compositions inorganiques-organiques solubles selon la revendication 1.

10. Agents de revêtement de surfaces, inorganiques ou organiques contenant les compositions inorganiques-organiques solubles selon la revendication 1.
